(19) 

**Europäisches Patentamt**
**European Patent Office**
**Office européen des brevets**

(11) **EP 2 316 980 B1**

(12) **EUROPEAN PATENT SPECIFICATION**

(45) Date of publication and mention
of the grant of the patent:
**14.11.2018 Bulletin 2018/46**

(51) Int Cl.:
*C22C 38/00* (2006.01)  *C22C 19/03* (2006.01)
*C22C 38/06* (2006.01)  *C23C 30/00* (2006.01)
*H01F 1/16* (2006.01)  *H01F 1/18* (2006.01)
*B32B 15/01* (2006.01)  *C21D 8/12* (2006.01)
*C22C 38/02* (2006.01)  *C22C 38/40* (2006.01)
*C22F 1/10* (2006.01)  *C23C 28/02* (2006.01)

(21) Application number: **09800350.2**

(22) Date of filing: **15.07.2009**

(86) International application number:
**PCT/JP2009/062822**

(87) International publication number:
**WO 2010/010836 (28.01.2010 Gazette 2010/04)**

(54) **NON-ORIENTED ELECTRICAL STEEL SHEET AND METHOD FOR MANUFACTURING THE SAME**

NICHTORIENTIERTES ELEKTROSTAHLBLECH UND SEIN HERSTELLUNGSVERFAHREN

TÔLE D'ACIER ÉLECTRIQUE NON ORIENTÉ ET SON PROCÉDÉ DE FABRICATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **22.07.2008 JP 2008188997**

(43) Date of publication of application:
**04.05.2011 Bulletin 2011/18**

(73) Proprietor: **Nippon Steel & Sumitomo Metal
Corporation
Tokyo 100-8071 (JP)**

(72) Inventors:
• **ARITA, Yoshihiro**
**Tokyo 100-8071 (JP)**
• **USHIGAMI, Yoshiyuki**
**Tokyo 100-8071 (JP)**
• **HIRANO, Shigeru**
**Tokyo 100-8071 (JP)**

• **FUJII, Hiroyasu**
**Tokyo 100-8071 (JP)**
• **YAMAGUCHI, Toshinao**
**Fukuoka-shi**
**Fukuoka 814-0161 (JP)**
• **KOIKE, Isao**
**Fukuoka-shi**
**Fukuoka 811-0201 (JP)**

(74) Representative: **Vossius & Partner
Patentanwälte Rechtsanwälte mbB
Siebertstrasse 3
81675 München (DE)**

(56) References cited:
**EP-A1- 1 632 582  WO-A1-01/68778
WO-A1-2009/093492  JP-A- 7 173 641
JP-A- 9 078 130  JP-A- H0 964 583
JP-A- 11 131 251  JP-A- H07 173 641
JP-A- S62 124 228  JP-A- 2007 144 132
JP-B1- 47 025 563  JP-B2- 4 034 632**

EP 2 316 980 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a non-oriented electrical steel sheet suitable for an iron core material of an electrical apparatus and a method of manufacturing the same.

BACKGROUND ART

In recent years, a low-loss electrical steel sheet has been used for a small-sized general-purpose motor and a compressor motor. In the electrical steel sheet as above, by mainly improving purity and coarsening crystal grains, a magnetizing property in a low magnetic field of about 1.0 T or less has been improved.

Further, in recent years, higher performance properties have been required for a non-oriented electrical steel sheet to be used as an iron core material of a rotor due to a worldwide increase in achievement of energy saving of an electrical apparatus.

However, it is difficult to further improve purity of an electrical steel sheet industrially. Further, a reduction in a core loss by coarsening crystal grains is saturated when a crystal grain diameter is 150 $\mu$m or so, but a crystal grain diameter of a conventional electrical steel sheet has already reached 150 $\mu$m or so. Thus, even though crystal grains are further coarsened, it is difficult to further reduce a core loss.

As described above, it has been difficult to further improve a magnetic property in a low magnetic field in a conventional art.

JPH0964583A discloses a electromagnetic shielding material, including a non-oriented electrical steel sheet and a Fe-Ni coating layer with a thickness of 5 to 100 $\mu$m.

CITATION LIST

PATENT LITERATURE

Patent Document 1: Japanese Laid-open Patent Publication No. 07-070719
Patent Document 2: Japanese Laid-open Patent Publication No. 08-165520
Patent Document 3: Japanese Laid-open Patent Publication No. 08-283853

SUMMARY OF THE INVENTION

TECHNICAL PROBLEM

The present invention has an object to provide a non-oriented electrical steel sheet in which a magnetic property in a low magnetic field is allowed to be further improved and a method of manufacturing the same.

SOLUTION TO PROBLEM

The present invention has been made in order to solve problems described above, and the gist thereof is as follows.

(1) A non-oriented electrical steel sheet includes: a base material; and an Fe-Ni alloy film formed on at least one surface of the base material, containing, by mass%, Fe: 10% to 40% and Ni: 60% to 90%, and having a thickness of 0.1 $\mu$m or more and 0.6 $\mu$m or less, wherein said base material consists of, by mass%: C: 0.05% or less; Si: not less than 0.1% nor more than 7.0%; and Al: not less than 0.01% nor more than 7.0%, and optionally: Mn: 1.0% or less; Ti: 30 ppm or less; N: 0.0030% or less; S: 30 ppm or less; Sn, Cu, and Ni: 0.50% or less in total; and a balance of the base material is composed of Fe and inevitable impurities.

(2) The non-oriented electrical steel sheet described in (1) further includes an insulating film formed on a surface of the base material.

(3) A method of manufacturing a non-oriented electrical steel sheet includes: forming, on at least one surface of a base material, an Fe-Ni alloy film that contains, by mass%, Fe: 10% to 40% and Ni: 60% to 90% to have a thickness of 0.1 $\mu$m or more and 0.6 $\mu$m or less, wherein the base material consists of, by mass%: C: 0.05% or less; Si: not less than 0.1% nor more than 7.0%; and Al: not less than 0.01% nor more than 7.0%, and optionally: Mn: 1.0% or less; Ti: 30 ppm or less; N: 0.0030% or less; S: 30 ppm or less; Sn, Cu, and Ni: 0.50 or less in total; and a balance of the base material is composed of Fe and inevitable impurities.

(4) The method of manufacturing the non-oriented electrical steel sheet described in (3) further includes forming an insulating film on a surface of the base material, before the forming the Fe-Ni alloy film.

(5) The method of manufacturing the non-oriented electrical steel sheet described in (3), further includes forming an insulating film on a surface of the base material, after the forming the Fe-Ni alloy film.

ADVANTAGEOUS EFFECTS OF INVENTION

According to the present invention, by a function of an appropriate Fe-Ni alloy film, magnetic domains on a surface of a base material are appropriately controlled, so that a magnetic property can be improved.

BRIEF DESCRIPTION OF DRAWINGS

[Fig. 1] Fig. 1 is a view showing magnetic properties in case of a low magnetic field;
[Fig. 2] Fig. 2 is a view showing a relationship between a frequency and a core loss improvement rate;
[Fig. 3] Fig. 3 is a view showing a relationship between a Ni content and a relative permeability;
[Fig. 4] Fig. 4 is a view showing relationships between a thickness of an Fe-Ni ally film and the relative permeability;
[Fig. 5] Fig. 5 is a cross-sectional view showing a structure of a non-oriented electrical steel sheet according to an embodiment of the present invention;
[Fig. 6] Fig. 6 is a cross-sectional view showing a structure of a non-oriented electrical steel sheet according to another embodiment of the present invention; and
[Fig. 7] Fig. 7 is a cross-sectional view showing a structure of a non-oriented electrical steel sheet according to still another embodiment of the present invention.

DESCRIPTION OF EMBODIMENTS

The present inventors found that, when an Fe-Ni alloy film is coated on a base material of a non-oriented electrical steel sheet, magnetic domains in the vicinity of a surface of the non-oriented electrical steel sheet are aligned in a direction parallel to the surface thereof, though details will be described later. Further, as a result, the present inventors also found that a magnetizing property in a low magnetic field (that is, for example, 0.8 T or so) is improved. The improvement in the magnetizing property in the low magnetic field can contribute to achievement of energy saving of an electrical apparatus, for example. Note that in the following explanation, a unit of a content of an element is mass% or mass ppm.

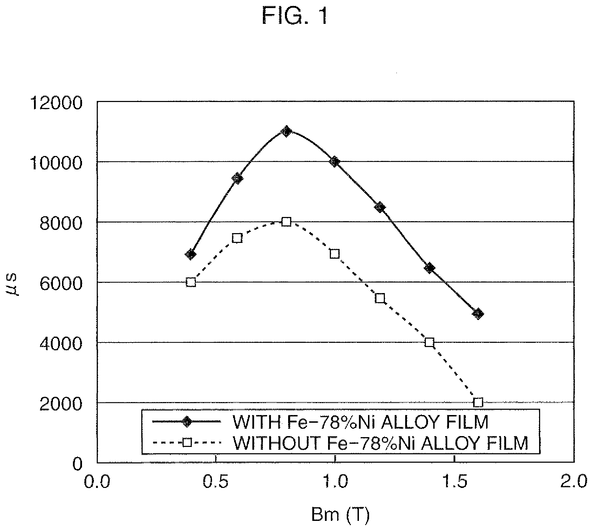

The present inventors formed an Fe-78%Ni alloy film on one surface of a non-oriented electrical steel sheet (base material) by a sputtering method. That is, one surface of a non-oriented electrical steel sheet was coated with an Fe-78%Ni alloy film. As the non-oriented electrical steel sheet, one containing C: 0.002%, Si: 3.0%, and Al: 0.5%, a balance of which being composed of Fe and inevitable impurities, and having a thickness of 0.35 mm was used. Further, a thickness of the Fe-78%Ni alloy film was set to 0.4 $\mu$m. Then, a DC magnetizing property was measured. When measuring the DC magnetizing property, a relationship between a maximum magnetic flux density Bm (0.4 T to 1.6 T) and a relative permeability $\mu$s was obtained. At this time, the relative permeability $\mu$s was measured in a rolling direction. For comparison, similar measurement was also conducted in a non-oriented electrical steel sheet having no Fe-78%Ni alloy film formed thereon. Results thereof are shown in Fig. 1.

As shown in Fig. 1, in the non-oriented electrical steel sheet having the Fe-78%Ni alloy film formed thereon, the relative permeability $\mu$s in a low magnetic field was increased as compared with the one having no Fe-78%Ni alloy film formed thereon. That is, a magnetic property in a low magnetic field was improved. Particularly, in the case of the maximum magnetic flux density Bm being 0.8T or so, the relative permeability $\mu$s was maximum. Incidentally, the relative permeability in the case of the maximum magnetic flux density Bm being 0.8T is a relative permeability to be obtained from a DC magnetization curve in which the maximum magnetic flux density is 0.8 T.

The present inventors obtained a relationship between a frequency (20 Hz to 400 Hz) and a core loss $W_1$ in the case of the maximum magnetic flux density Bm being 1.5 T in the non-oriented electrical steel sheet having the Fe-78%Ni alloy film formed thereon. Further, in the non-oriented electrical steel sheet having no Fe-78%Ni alloy film formed thereon, they obtained a relationship between a frequency (20 Hz to 400 Hz) and a core loss $W_2$ in the case of the maximum magnetic flux density Bm being 1.5 T. Then, these relationships were compared.

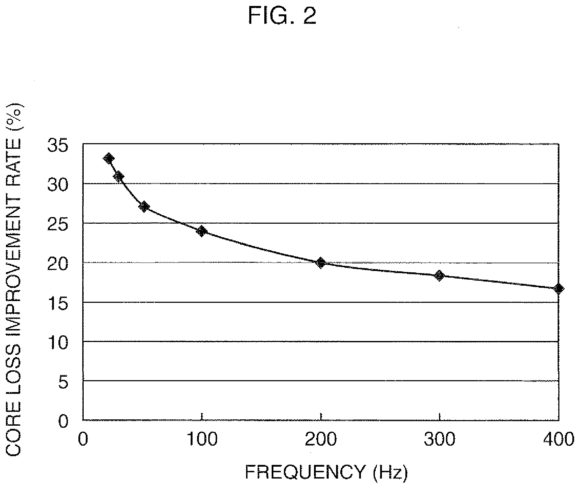

As a result, at frequencies of 400 Hz or less, the core loss $W_1$ was lower than the core loss $W_2$ Fig. 2 shows a relationship between a frequency and a core loss improvement rate. The core loss improvement rate is expressed by

the following expression.

$$\text{core loss improvement rate (\%)} = 100 \times (1 - W_1/W_2)$$

As shown in Fig. 2, at frequencies of 400 Hz or less, the core loss improvement rate was 15% or more.

When the results shown in Fig. 1 and a result shown in Fig. 2 are considered, it can be said that the formation of the Fe-78%Ni alloy film leads to the improvement of the relative permeability $\mu$s and the reduction of the core loss (a hysteresis loss). The core loss at the maximum magnetic flux density of 1.5 T and at a frequency of 50 Hz is described as W15/50.

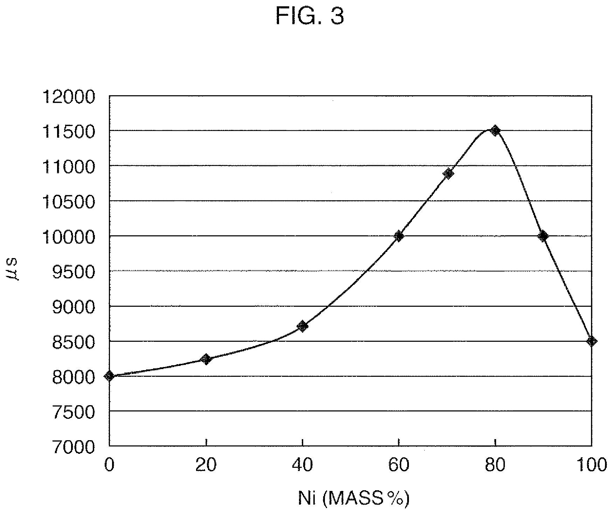

The present inventors formed Fe-Ni alloy films having various compositions (Ni: 0% to 100%) on one surface of a non-oriented electrical steel sheet by an electroplating method in order to find the composition of the Fe-Ni alloy film suitable for improving a magnetic property. That is, one surface of a non-oriented electrical steel sheet was coated with Fe-Ni alloy films having different compositions. As the non-oriented electrical steel sheet, one containing C: 0.003%, Si: 2.1%, and Al: 0.3%, a balance of which being composed of Fe and inevitable impurities, and having a thickness of 0.35 mm was used. Further, thicknesses of the Fe-Ni alloy films were set to 0.3 $\mu$m in any of the compositions. Then, a DC magnetizing property was measured. When measuring the DC magnetizing property, the maximum magnetic flux density Bm was set to 0.8 T, and a relationship between a Ni content and the relative permeability $\mu$s was obtained. A result thereof is shown in Fig. 3.

As shown in Fig. 3, in the case of the Ni content being 78.5% or so, the relative permeability $\mu$s was maximum. Generally, the composition of Fe-78.5%Ni is a permalloy composition having a high magnetic permeability. On the other hand, in the case of the Ni content being less than 60%, in the case of it being less than 50% in particular, the relative permeability $\mu$s was low. Further, the relative permeability $\mu$s was low also in the case when the Ni content exceeded 90%. It is possible to consider that such a tendency occurs because the composition in which the Ni content is less than 60% or the composition in which it exceeds 90% has a large difference in the permalloy composition.

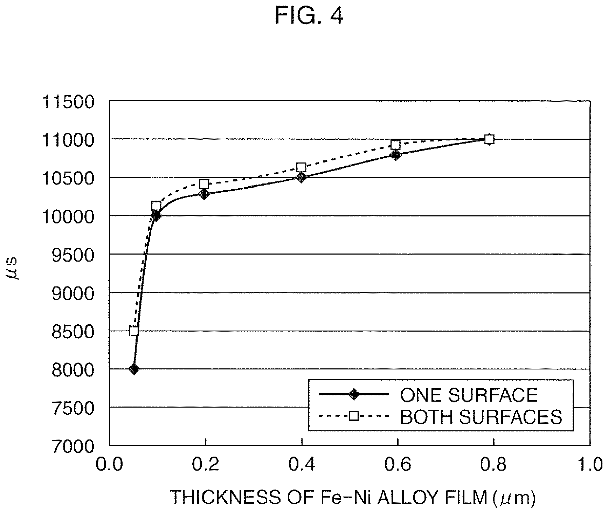

The present inventors formed Fe-Ni alloy films having various thicknesses (0.05 $\mu$m to 0.8$\mu$m) on one surface of a non-oriented electrical steel sheet by an immersion plating method in order to find the thickness of the Fe-Ni alloy film suitable for improving a magnetic property. That is, one surface of a non-oriented electrical steel sheet was coated with Fe-Ni alloy films having different thicknesses. As the non-oriented electrical steel sheet, one containing C: 0.003%, Si: 2.4%, and Al: 0.5%, a balance of which being composed of Fe and inevitable impurities, and having a thickness of 0.35 mm was used. Further, the Ni contents of the Fe-Ni alloy films were set to 78% in any of the thicknesses. Then, a DC magnetizing property was measured. When measuring the DC magnetizing property, the maximum magnetic flux density Bm was set to 0.8 T, and a relationship between the thickness (a coating thickness) of the Fe-Ni alloy film and the relative permeability $\mu$s was obtained. Further, similar measurement was also conducted in one having the Fe-Ni alloy films formed on both surfaces of the non-oriented electrical steel sheet. Results thereof are shown in Fig. 4.

As shown in Fig. 4, when the thickness of the Fe-Ni alloy film was less than 0.1 $\mu$m, the relative permeability $\mu$s was extremely low. Further, when the thickness of the Fe-Ni alloy film exceeded 0.6 $\mu$m, an effect of improving the relative permeability $\mu$s was saturated.

The reason why the relative permeability $\mu$s is extremely low when the thickness of the Fe-Ni alloy film is less than 0.1 $\mu$m is that magnetic domains on a surface of the non-oriented electrical steel sheet are not easily aligned despite forming the Fe-Ni alloy film. Further, the reason why the effect of improving the relative permeability $\mu$s is saturated is that as long as the magnetic domains on the surface of the non-oriented electrical steel sheet are sufficiently aligned, even though the Fe-Ni alloy film having the thickness of the above or more is formed, the magnetic domains are not easily aligned any more.

Further, as shown in Fig. 4, the relative permeability $\mu$s in the case when the Fe-Ni alloy film was formed on one surface and the relative permeability $\mu$s in the case when the Fe-Ni alloy film was formed on both surfaces were equal to each other.

This is because when excitation, a magnetic flux concentrates in a region to be most easily magnetized in a thickness direction of the non-oriented electrical steel sheet. That is, the reason is that although the Fe-Ni alloy film is formed on a single region (one surface) in the thickness direction, or the Fe-Ni alloy films are formed on two regions (both surfaces) in the thickness direction, it is in a single region that the magnetic flux concentrates most.

The present inventors learned from these results of experiments that by forming the Fe-Ni alloy film on a surface of the non-oriented electrical steel sheet, the relative permeability and the core loss are dramatically improved. Further, the present inventors also learned that it is necessary that the Ni content of the Fe-Ni alloy film is 60% to 90% and the thickness of the Fe-Ni alloy film is 0.1 $\mu$m or more for improving the relative permeability and the core loss. Further, the present inventors also learned that when the thickness of the Fe-Ni alloy film exceeds 0.6. $\mu$m, the effect of improving the relative permeability and the core loss is saturated, and even though the Fe-Ni alloy film is formed on one surface or it is formed on both surfaces, the effect of improving the relative permeability and the core loss is equal to each other in both the cases.

Next, the details of the present invention that has been made based on these new findings will be explained. First, there will be explained a composition of a non-oriented electrical steel sheet itself (base material), on a surface of which an Fe-Ni alloy film is to be formed.

When a C content exceeds 0.05%, a core loss is easily increased remarkably. Thus, the C content is 0.05% or less.

Si is an element effective to increase electrical resistance, and when a Si content is less than 0.1%, it becomes difficult to obtain sufficient resistivity. On the other hand, when the Si content ratio of exceeds 7%, cold-rolling performance is easily lowered remarkably. Thus, the Si content is not less than 0.1% nor more than 7%.

Al is an element effective to increase electrical resistance similarly to Si. Further, Al is an element also contributing to deoxidation, and when an Al content is less than 0.01%, it is difficult to perform sufficient deoxidation. On the other hand, when the Al content exceeds 7%, castability is lowered, and productivity is easily lowered. Thus, the Al content is not less than 0.01% nor more than 7%.

Further, other components of the non-oriented electrical steel sheet (base material) are optional and, if present, the contents of Mn, Ti, N, S, Sn, Cu, and Ni fall within the following ranges.

Mn generates MnS, and has an effect of rendering S being an impurity harmless. Thus, Mn is preferably contained 0.1% or more. However, even though Mn is contained more than 1.0%, the effect of rendering S harmless becomes saturated.

Ti generates nitride and/or carbide to deteriorate a magnetizing property and a core loss. Thus, the Ti content is 30 ppm or less, and preferably 15 ppm or less.

N generates AlN and/or TiN to deteriorate a magnetizing property. Thus, the N content is 0.0030% or less.

S generates MnS to deteriorate a magnetizing property and a core loss. Thus, the S content is 30 ppm or less.

Sn, Cu, and Ni have a function of inhibiting nitridation and oxidation of a surface of a non-oriented electrical steel sheet during annealing, which is strain relief annealing in particular, and have a function of improving an excitation property by an improvement in aggregate structure. Thus, Sn, Cu, and Ni are preferably contained 0.01% or more in total. These effects are equal among Sn, Cu, and Ni, so that at least one type of them is only sufficient to be contained. However, even though Sn, Cu, and Ni are contained more than 0.50% in total, the function of inhibiting nitridation and oxidation by atmosphere gas during annealing and the function of improving aggregate structure is saturated.

Next, the Fe-Ni alloy film will be explained.

The Fe-Ni alloy film is preferably composed of Fe: 10% to 40% and Ni: 90% to 60%, and more preferably composed of Fe: 15% to 30% and Ni: 85% to 70%. This is to obtain a good magnetic property in a low magnetic field. Incidentally, other metallic elements such as Mo may also be contained in the Fe-Ni alloy film. In the above case, the Fe-Ni alloy film contains Fe: 10% to 40% and Ni: 90 to 60%, and preferably contains Fe: 15% to 30% and Ni: 85% to 70%.

A method of forming the Fe-Ni alloy film on a surface of the non-oriented electrical steel sheet (base material) is not limited in particular. It is possible to form the Fe-Ni alloy film on a surface of the non-oriented electrical steel sheet by, for example, a dry coating method such as a PVD (physical vapor deposition) method and a CVD (chemical vapor deposition) method, and a wet coating method such as a plating method.

The thickness of the Fe-Ni alloy film is set to 0.1 $\mu$m or more and 0.6 $\mu$m or less.

This is because the sufficient effects cannot be obtained when the thickness is less than 0.1 $\mu$m as described above. On the other hand, when the thickness of the Fe-Ni alloy film exceeds 0.6 $\mu$m, the effect of improving the relative permeability and the core loss is saturated, so that the thickness of the Fe-Ni alloy film is sufficiently 0.6 $\mu$m or less. However, the thickness may also exceed 0.6 $\mu$m for a reason such as operation stability.

Further, as described above, the Fe-Ni alloy film is sufficiently formed on one surface of the non-oriented electrical steel sheet (base material), but it may also be formed on both surfaces of the non-oriented electrical steel sheet (base material).

Next, there will be explained a magnetic property of the non-oriented electrical steel sheet having the Fe-Ni alloy film formed on at least one surface thereof.

As for the DC magnetizing property of the non-oriented electrical steel sheet having the Fe-Ni alloy film formed on one surface thereof, in the above-described experiments, the relative permeability $\mu$s in the rolling direction exhibited a maximum value at the maximum magnetic flux density Bm of 0.8 T or so, and the value was 10000 or more. Thus, it is possible to consider that as long as minimum various conditions as above are satisfied, the relative permeability $\mu$s of 10000 or more can be obtained at the maximum magnetic flux density Bm of 0.8 T.

Further, in the above-described experiments, at frequencies of 400 Hz or less, by forming the Fe-Ni alloy film, the core loss was improved by 15% or more. Thus, it is possible to consider that as long as the above-described minimum various conditions are satisfied, in any direction, by forming the Fe-Ni alloy film, the core loss is improved by 10% or more.

Incidentally, a method of manufacturing the non-oriented electrical steel sheet as the base material, namely the non-oriented electrical steel sheet before the Fe-Ni alloy film is formed thereon, is not limited in particular, and the non-oriented electrical steel sheet can be manufactured according to a conventional method. For example, annealing after hot rolling may also be performed as needed. Further, a thickness of the non-oriented electrical steel sheet after cold rolling may also be set to 0.10 mm to 0.80 mm depending on a required property. Further, a finish annealing temperature may also be adjusted within a range of 700°C to 1100°C depending on a required property. Further, strain relief annealing may also be performed after a punching-out process of a motor core or the like.

Further, when manufacturing the non-oriented electrical steel sheet as the base material, an insulating film is formed on a surface of the non-oriented electrical steel sheet after finish annealing, and the Fe-Ni alloy film may also be formed after the above insulating film is formed. Further, the Fe-Ni alloy film may also be formed before the above insulating film is formed.

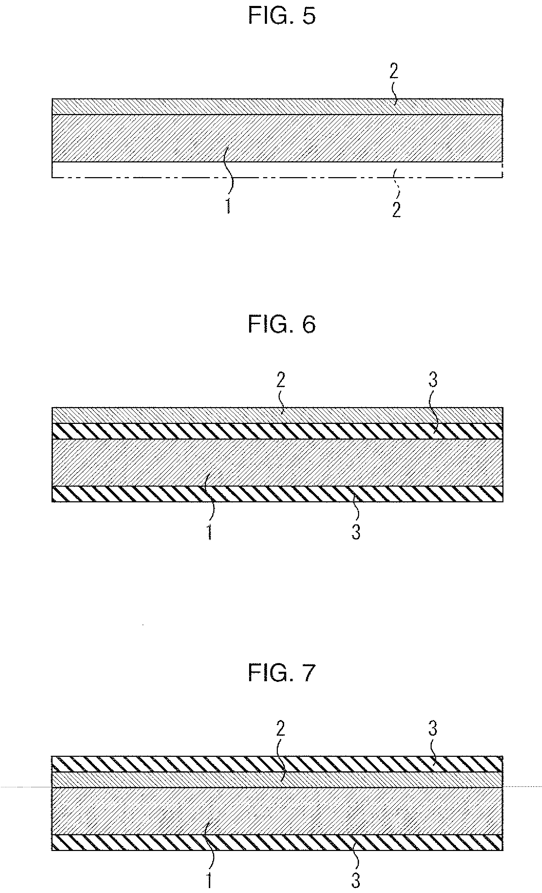

The non-oriented electrical steel sheet according to an embodiment of the present invention is provided with a structure shown in Fig. 5, for example. That is, on one surface or both surfaces of a base material 1, an Fe-Ni alloy film 2 is formed. As shown in Fig. 6, an insulating film 3 may also be formed between the base material 1 and the Fe-Ni alloy film 2, and as shown in Fig. 7, the insulating film 3 may also be formed on the Fe-Ni alloy film 2.

Next, there will be explained experiments for confirming the effects of the present invention conducted by the present inventors.

<Experiment 1>

Each of Fe-Ni alloy films having compositions shown in Table 1 was formed on one surface or both surfaces of a non-oriented electrical steel sheet (base materials), which was after finish annealing and before an insulating film was formed thereon, by an electroplating method. That is, one surface or both surfaces of a non-oriented electrical steel sheet was/were coated with Fe-Ni alloy film(s). As the non-oriented electrical steel sheet, one containing C: 0.002%, Si: 3.2%, and Al: 1.0%, a balance of which being composed of Fe and inevitable impurities, and having a thickness of 0.35 mm was used. Further, thickness of the Fe-Ni alloy film was set to 0.5 $\mu$m per one surface. Next, an insulating film was formed on an entire surface of the non-oriented electrical steel sheet. Then, the relative permeability $\mu$s in the rolling direction at the maximum magnetic flux density Bm of 0.8 T was measured. A result thereof is shown in Table 1.

[Table 1]

| Sample number | Fe (mass%) | Ni (mass%) | Coated surface | Relative permeability | Note |
|---|---|---|---|---|---|
| 1-1 | 48 | 52 | one surface | 8400 | Comparative example |
| | | | both surfaces | 8450 | Comparative example |
| 1-2 | 39 | 61 | one surface | 10100 | Invention example |
| | | | both surfaces | 10200 | Invention example |
| 1-3 | 19 | 81 | one surface | 12000 | Invention example |
| | | | both surfaces | 11800 | Invention example |
| 1-4 | 11 | 89 | one surface | 10200 | Invention example |
| | | | both surfaces | 10100 | Invention example |
| 1-5 | 7 | 93 | one surface | 8800 | Comparative example |
| | | | both surfaces | 8900 | Comparative example |

As shown in Table 1, in samples in which the Ni content of the Fe-Ni alloy film were 60% to 90%, the high relative permeability $\mu$s of 10000 or more was obtained. On the other hand, in a sample in which the Ni content was less than 60% and a sample in which the Ni content exceeded 90%, the relative permeability $\mu$s was lowered to less than 10000. These tendencies were common between the samples in which the Fe-Ni alloy film was formed on only one surface and the samples in which the Fe-Ni alloy films were formed on both surfaces.

<Experiment 2>

Each of Fe-78%Ni alloy films having thicknesses shown in Table 2 was formed on one surface of a non-oriented electrical steel sheet (base materials), which was after finish annealing and before an insulating film was formed thereon, by a PVD method. That is, Fe-78%Ni alloy film was coated on one surface of a non-oriented electrical steel sheet. As the non-oriented electrical steel sheet, one containing C: 0.001%, Si: 4.5%, and Al: 3.5%, a balance of which being composed of Fe and inevitable impurities, and having a thickness of 0.30 mm was used. Next, an insulating film was formed on an entire surface of the non-oriented electrical steel sheet. Then, the relative permeability $\mu$s in the rolling direction at the maximum magnetic flux density Bm of 0.8 T was measured. A result thereof is shown in Table 2.

[Table 2]

| Sample number | Film thickness ($\mu$m) | Relative permeability | Evaluation |
|---|---|---|---|
| 2-1 | 0.00 | 5000 | $\times$ |
| 2-2 | 0.05 | 8000 | $\times$ |
| 2-3 | 0.1 | 10000 | $\circledcirc$ |
| 2-4 | 0.2 | 10300 | $\circledcirc$ |
| 2-5 | 0.4 | 10500 | $\circledcirc$ |
| 2-6 | 0.6 | 10800 | $\circledcirc$ |
| 2-7 | 0.8 | 11000 | $\bigcirc$ |
| 2-8 | 0.9 | 11000 | $\bigcirc$ |
| 2-9 | 1.0 | 11000 | $\bigcirc$ |
| Evaluation: $\circledcirc$ particularly effective (the film thickness of 0.1 to 0.6 $\mu$m) $\bigcirc$ one that is effective but saturated (the film thickness of over 0.6 $\mu$m) $\times$ comparative example (the film thickness of less than 0.1 $\mu$m) | | | |

As shown in Table 2, in samples in which the thickness of the Fe-Ni alloy film was 0.1 $\mu$m or more, the high relative permeability $\mu$s of 10000 or more was obtained. Further, in samples in which the thickness of the Fe-Ni alloy film was less than 0.1 $\mu$m, the relative permeability $\mu$s was lowered to less than 10000. Further, when the thickness of the Fe-Ni alloy film exceeded 0.6 $\mu$m, the effects was saturated.

<Experiment 3>

Each of Fe-Ni alloy films having compositions shown in Table 3 was formed on one surface of a non-oriented electrical steel sheet (base material), which was after finish annealing and before an insulating film was formed thereon, by an immersion plating method. That is, an Fe-Ni alloy films was coated on one surface of a non-oriented electrical steel sheet. As the non-oriented electrical steel sheet, one containing C: 0.01%, Si: 2.5%, and Al: 4.5%, a balance of which being composed of Fe and inevitable impurities, and having a thickness of 0.50 mm was used. Further, thickness of the Fe-Ni alloy film was set to 0.4 $\mu$m. Next, an insulating film was formed on an entire surface of the non-oriented electrical steel sheet. Then, the relative permeability $\mu$s in the rolling direction at the maximum magnetic flux density Bm of 0.8 T was measured. Further, a core loss W15/50, (which is a core loss at the maximum magnetic flux density Bm of 1.5 T and at a frequency of 50 Hz), was also measured. Results thereof are shown in Table 3.

[Table 3]

| Sample number | Fe (mass%) | Ni (mass%) | Relative permeability | W15/50 (W/kg) | Core loss improvement rate (%) | Evaluation |
|---|---|---|---|---|---|---|
| 3-1 | - | - | 7000 | 2.35 | base | $\times$ |
| 3-2 | 35 | 65 | 10100 | 2.22 | 5.5 | $\bigcirc$ |
| 3-3 | 30 | 70 | 11800 | 2.02 | 14.0 | $\circledcirc$ |
| 3-4 | 25 | 75 | 12300 | 1.98 | 15.7 | $\circledcirc$ |
| 3-5 | 20 | 80 | 12700 | 1.92 | 18.3 | $\circledcirc$ |
| 3-6 | 15 | 85 | 12100 | 2.05 | 12.8 | $\circledcirc$ |

(continued)

| Sample number | Fe (mass%) | Ni (mass%) | Relative permeability | W15/50 (W/kg) | Core loss improvement rate (%) | Evaluation |
|---|---|---|---|---|---|---|
| 3-7 | 10 | 90 | 10200 | 2.19 | 6.8 | ○ |

| Evaluation: ◎ particularly effective (the core loss improvement rate of over 10%) ○ effective (the relative permeability of 10000 or more, and the core loss improvement rate of less than 10%) × comparative example (the relative permeability of less than 10000) |
|---|

As shown in Table 3, the relative permeability $\mu s$ was 10000 or more in all samples in which the Fe-Ni alloy film was formed. Further, in the samples in which the Ni content of the Fe-Ni alloy film was 70% to 85%, the core loss improvement rate was increased to 10% or more.

INDUSTRIAL APPLICABILITY

The present invention can be utilized for a non-oriented electrical steel sheet to be used for a motor or the like.

**Claims**

1. A non-oriented electrical steel sheet comprising:

   a base material; and
   an Fe-Ni alloy film formed on at least one surface of said base material, containing, by mass%, Fe: 10% to 40% and Ni: 60% to 90%, and having a thickness of 0.1 $\mu$m or more and 0.6 $\mu$m or less, wherein said base material consists of, by mass%:

   C: 0.05% or less;
   Si: not less than 0.1% nor more than 7.0%; and
   Al: not less than 0.01% nor more than 7.0%, and

   optionally:

   Mn: 1.0% or less;
   Ti: 30 ppm or less;
   N: 0.0030% or less;
   S: 30 ppm or less;
   Sn, Cu, and Ni: 0.50% or less in total; and
   a balance of said base material is composed of Fe and inevitable impurities.

2. The non-oriented electrical steel sheet according to claim 1, further comprising an insulating film formed on a surface of said base material.

3. A method of manufacturing a non-oriented electrical steel sheet comprising:

   forming, on at least one surface of a base material, an Fe-Ni alloy film that contains, by mass%, Fe: 10% to 40% and Ni: 60% to 90% to have a thickness of 0.1 $\mu$m or more and 0.6 $\mu$m or less, wherein the base material consists of, by mass%:

   C: 0.05% or less;
   Si: not less than 0.1% nor more than 7.0%; and
   Al: not less than 0.01% nor more than 7.0%, and

   optionally:

   Mn: 1.0% or less;

Ti: 30 ppm or less;
N: 0.0030% or less;
S: 30 ppm or less;
Sn, Cu, and Ni: 0.50% or less in total; and
a balance of the base material is composed of Fe and inevitable impurities.

4.  The method of manufacturing a non-oriented electrical steel sheet according to claim 3, further comprising forming an insulating film on a surface of the base material, before said forming the Fe-Ni alloy film.

5.  The method of manufacturing a non-oriented electrical steel sheet according to claim 3, further comprising forming an insulating film on a surface of the base material, after said forming the Fe-Ni alloy film.

**Patentansprüche**

1.  Ein nicht-orientiertes Elektrostahlblech, umfassend:

    ein Basismaterial; und
    einen auf mindestens einer Oberfläche des Basismaterials gebildeten Fe-Ni-Legierungsfilm, der, in Massen-%, Fe: 10% bis 40% und Ni: 60% bis 90% enthält und eine Dicke von 0,1 $\mu$m oder mehr und 0,6 $\mu$m oder weniger aufweist, wobei das Basismaterial, in Massen-%, besteht aus:

    C: 0,05% oder weniger;
    Si: nicht weniger als 0,1% noch mehr als 7,0%; und
    Al: nicht weniger als 0,01% noch mehr als 7,0% und

    gegebenenfalls:

    Mn: 1,0% oder weniger;
    Ti: 30 ppm oder weniger;
    N: 0,0030% oder weniger;
    S: 30 ppm oder weniger;
    Sn, Cu und Ni: insgesamt 0,50% oder weniger; und
    wobei ein Rest des Basismaterials aus Fe und unvermeidbaren Verunreinigungen besteht.

2.  Das nicht-orientierte Elektrostahlblech nach Anspruch 1, weiter umfassend einen auf einer Oberfläche des Basismaterials ausgebildeten Isolierfilm.

3.  Ein Verfahren zur Herstellung eines nicht-orientierten Elektrostahlblechs, umfassend:

    Ausbilden, auf mindestens einer Oberfläche eines Basismaterials, eines Fe-Ni-Legierungsfilms, der, in Massen-%, Fe: 10% bis 40% und Ni: 60% bis 90% enthält, so dass er eine Dicke von 0,1 $\mu$m oder mehr und 0,6 $\mu$m oder weniger aufweist, wobei das Basismaterial, in Massen-%, besteht aus:

    C: 0,05% oder weniger;
    Si: nicht weniger als 0,1% noch mehr als 7,0%; und
    Al: nicht weniger als 0,01% noch mehr als 7,0% und

    gegebenenfalls:

    Mn: 1,0% oder weniger;
    Ti: 30 ppm oder weniger;
    N: 0,0030% oder weniger;
    S: 30 ppm oder weniger;
    Sn, Cu und Ni: insgesamt 0,50% oder weniger; und
    wobei ein Rest des Basismaterials aus Fe und unvermeidbaren Verunreinigungen besteht.

4.  Das Verfahren zur Herstellung eines nicht-orientierten Elektrostahlblechs nach Anspruch 3, weiter umfassend Bilden eines Isolierfilms auf einer Oberfläche des Basismaterials vor dem Bilden des Fe-Ni-Legierungsfilms.

**5.** Das Verfahren zur Herstellung eines nicht-orientierten Elektrostahlblechs nach Anspruch 3, weiter umfassend Ausbilden eines Isolierfilms auf einer Oberfläche des Basismaterials nach dem Bilden des Fe-Ni-Legierungsfilms.

**Revendications**

**1.** Tôle d'acier électrique non orienté comprenant :

un matériau de base ; et
un film d'alliage Fe-Ni formé sur au moins une surface dudit matériau de base, contenant, en % en masse, Fe : 10 % à 40 % et Ni : 60 % à 90 %, et ayant une épaisseur de 0,1 $\mu$m ou plus et 0,6 $\mu$m ou moins, où
ledit matériau de base consiste en, en % en masse :

C : 0,05 % ou moins ;
Si : pas moins de 0,1 % et pas plus de 7,0 % ; et
Al : pas moins de 0,01 % et pas plus de 7,0 %, et

éventuellement :

Mn : 1,0 % ou moins ;
Ti : 30 ppm ou moins ;
N : 0,0030 % ou moins ;
S : 30 ppm ou moins ;
Sn, Cu et Ni : 0,50 % ou moins au total ; et
un complément dudit matériau de base est composé de Fe et d'impuretés inévitables.

**2.** Tôle d'acier électrique non orienté selon la revendication 1, comprenant en outre un film isolant formé sur une surface dudit matériau de base.

**3.** Procédé de fabrication d'une tôle d'acier électrique non orienté comprenant :

la formation, sur au moins une surface d'un matériau de base, d'un film d'alliage Fe-Ni qui contient, en % en masse, Fe : 10 % à 40 % et Ni : 60 % à 90 % pour avoir une épaisseur de 0,1 $\mu$m ou plus et 0,6 $\mu$m ou moins, où
le matériau de base consiste en, en % en masse :

C : 0,05 % ou moins ;
Si : pas moins de 0,1 % et pas plus de 7,0 % ; et
Al : pas moins de 0,01 % et pas plus de 7,0 %, et

éventuellement :

Mn : 1,0 % ou moins ;
Ti : 30 ppm ou moins ;
N : 0,0030 % ou moins ;
S : 30 ppm ou moins ;
Sn, Cu et Ni : 0,50 % ou moins au total ; et
un complément du matériau de base est composé de Fe et d'impuretés inévitables.

**4.** Procédé de fabrication d'une tôle d'acier électrique non orienté selon la revendication 3, comprenant en outre la formation d'un film isolant sur une surface du matériau de base, avant ladite formation du film d'alliage Fe-Ni.

**5.** Procédé de fabrication d'une tôle d'acier électrique non orienté selon la revendication 3, comprenant en outre la formation d'un film isolant sur une surface du matériau de base, après ladite formation du film d'alliage Fe-Ni.

FIG. 1

FIG. 2

## FIG. 3

FIG. 4

## FIG. 5

## FIG. 6

## FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0964583 A
- JP 7070719 A
- JP 8165520 A
- JP 8283853 A